# EUROPEAN PATENT APPLICATION

(11) **EP 2 211 255 A1**
(43) Date of publication of application: **28.07.2010**
(21) Application number: 08849044.6
(22) Date of filing: 14.10.2008
(51) Int. Cl.: G06F 3/041, H04M 1/00, H04M 1/02

(54) **INPUT DEVICE FOR MOBILE ELECTRONIC DEVICE, AND MOBILE ELECTRONIC DEVICE**

(30) Priority: 15.11.2007 JP 2007296972
(71) Applicant: Panasonic Corporation, Kadoma-shi Osaka 571-8501 (JP)
(72) Inventor: NAKAO, Masatoshi, Osaka-shi, Osaka 540-6207 (JP)
(74) Representative: Grünecker, Kinkeldey, Stockmair & Schwanhäusser Anwaltssozietät
(86) International application number: PCT/JP2008/002895
(87) International publication number: WO 2009/063590

(57) **Abstract**

To enable performance of blind operation despite user's input operation for a touch panel.

An input operation identification section 200 outputs to an application 100 a control signal for instructing execution of a corresponding command based on an operation signal input from an input signal control section 300 along with performance of a touch panel 10. On this occasion, when there is detected input operation involving movement of input coordinates over an input surface resultant from user's continual operation, the size of a movement trajectory of the input operation is determined. Input operation whose movement trajectory is smaller than a predetermined value is recognized as ordinary operation, and execution of a first command is instructed. Input operation whose movement trajectory is equal to or greater than the predetermined value is recognized as a special operation and execution of a second command is instructed.

## Description

### <Technical Field>

The present invention relates to an input device of portable electronic equipment that can be utilized for input operation of portable electronic equipment; for instance, a portable phone terminal, a personal digital assistant (PDA), a portable music player, and a portable game machine, as well as to portable electronic equipment.

### <Background Art>

In various pieces of portable electronic equipment, a touch panel is frequently used in an operation section for the purpose of user input operation in order to enhance user's operability and reduce the number mechanical operation buttons. When a user touches or presses an arbitrary point on a plane with a finger, or the like, the touch panel detects input operation, thereby sensing coordinates of an input position and changes in the coordinates of the input position. In general, a touch panel is placed while superimposed on a display screen, like a liquid crystal indicator, and positions of various operation buttons appearing on a display screen according to circumstances are correlated with coordinates on the touch panel. A necessity for providing a plurality of mechanical operation buttons is thereby obviated. Further, it becomes possible to freely change the locations, number, and shapes of operation buttons without making changes to hardware by means of making changes only to information about a correlation between positions of respective operation buttons to be displayed and coordinates of the buttons on a touch panel and specifics to be displayed on the display screen.

Known related-art techniques pertaining to the input device using a touch panel of this type are described in connection with; for instance, Patent Document 1, Patent Document 2, Patent Document 3, and Patent Document 4.

What is proposed in connection with Patent Document 1 and Patent Document 2 is to examine a contact area between a surface of a touch panel and a finger during detection of a state of input operation, thereby determining the magnitude of press force exerted by the finger.

What is proposed in connection with Patent Document 3 is to examine a contact area between the surface of a touch panel and a finger in order to facilitate alignment of positions pressed by the user with a plurality of displayed buttons and to prevent performance of erroneous operation (e.g., simultaneous pressing of a plurality of buttons, and the like; and to scale up a display of the buttons, or the like, when the respective displayed buttons are smaller than the contact area or scale down the display, like buttons, when the respective displayed buttons are larger than the contact area.

What is proposed in connection with Patent Document 4 is to determine the size of a contact area between a surface of a touch panel and a pen and the number of simultaneously-touched coordinate points during detection of a state of input operation and to switch details of operation according to detection results.
Patent Document 1: JP-A-4-278627
Patent Document 2: JP-A-2005-265632
Patent Document 3: JP-A-10-49305
Patent Document 4: JP-A-2000-284912

### <Disclosure of the Invention>

### <Problem that the Invention is to solve>

Portable electronic equipment having a touch panel as an input operation section as mentioned above does not need separate preparation of a plurality of individual mechanical operation buttons. Hence, it also becomes possible to simplify a hardware configuration, to reduce a space specifically designed for arranging buttons and increase an area of a display screen instead, and to increase or decrease the number of buttons according to circumstances.

Incidentally, when such portable electronic equipment is operated, the user presses a touch panel at the position of a desired button while visually ascertaining positions of respective operation buttons appearing on a screen; hence, it is impossible to perform input operation in the environment where the user cannot see the display screen. For instance, there frequently arise cases where the user desires to change a sound level while listening to music by use of a portable music player held in a pocket of a cloth or a bag. Taking the portable music player out of the pocket to control a sound level every time such a circumstance arises impose a great inconvenience on the user. Therefore, the user frequently gropes for a predetermined operation button, or the like, with a hand while holding the portable music player in the pocket, to thus control a sound level or the like.

When the portable music player is equipped with mechanical operation buttons, knob, and the like, the user can tangibly ascertain projections and indentations or a positional relationship among the buttons or knobs, so that the user can blindly operate the button or knob. However, portable electronic equipment which enables operation by use of a touch panel does not have any projections or indentations, such as buttons. Therefore, the user cannot grope about positions of respective buttons with a hand and hence cannot blindly perform operation. The user consequently has no alternative way but to take portable electronic equipment out of a pocket every time controlling of a sound level, or the like, is performed and to perform operation while visually ascertaining details appearing on a screen and checking positions of operation buttons. For these reasons, related-art portable electronic equipment are often provided with buttons that potentially undergo frequent operations by the user, like a sound control button, as mechanical operation buttons separate from the touch panel so that the user can blindly operate these buttons with a hand.

However, when the electronic equipment is provided with a touch panel and, in addition, mechanical operation buttons, the number of components is increased, which in turn adds to manufacturing cost. Further, an extra configuration space where mechanical operation buttons are to be placed is required, which hinders miniaturization of the portable electronic equipment and which poses difficulty in making full use of an advantage of the touch panel.

The present invention has been conceived in view of the circumstances and aims at providing an input device of portable electronic equipment that makes it possible for a user to blindly perform input operation, despite on a touch panel, and portable electronic equipment.

### <Means for Solving the Problem>

An input device of portable electronic equipment of the present invention is an input device of portable electronic equipment comprising a touch panel having an input function by a contact operation on an input surface; a display section superimposed on the input surface of the touch panel and operable to display visual information pertaining to input operation; and an input control section that commands processing responsive to the input operation based on an input signal from the touch panel, wherein the input control section is for instructing execution of a command allocated to predetermined processing set for input coordinates on the input surface of the touch panel and specifics of operation, and has a function of instructing performance of determining size of a movement trajectory of the input operation when input operation involving movement of the input coordinates is detected as input operation for the touch panel, executing a first command in response to first input operation whose movement trajectory is smaller than a predetermined value, and executing a second command differing from the first command or identical with the first command in response to second input operation whose movement trajectory is equal to or greater than a predetermined value.
The user there uses first input operation and second input operation according to the circumstances by changing the size of input operation, to thus make it possible to execute the first command or the second command according to the size of input operation. Further, operation buttons, or the like, embodied in the form of visible information displayed on a display section are combined to a touch panel, whereby input operation corresponding to an operation button, or the like, is performed, to thus enable performance of the first command. Further, the second command can be executed by means of second input operation whose movement trajectory is large. Therefore, the user can blindly perform operation without viewing operation buttons, and the like, on the display section in the touch panel.

The present invention is directed toward the input device of portable electronic equipment, wherein the input control section includes a section that issues an instruction for executing a first command in response to input operation allocated to an operation button displayed on the display section and executing a second command in response to predetermined input operation deviating from the operation button by recognizing the operation as special operation.
The user thereby uses input operation corresponding to an operation button and special operation not related to the operation button according to the circumstances, to thus be able to execute the first command or the second command. Hence, the user can blindly perform operation even on the touch panel.

The present invention is directed toward the input device of portable electronic equipment, wherein the input control section includes a section that issues an instruction for executing a first command allocated to a corresponding operation button when there is detected input operation whose movement trajectory is equal to or smaller than a display range of an operation button displayed on the display section and for executing a second command allocated to special operation when there is detected input operation whose movement trajectory is of a predetermined size or more when compared with the operation button.
It is thereby possible to perform, in a distinguishing manner, input operation that is equal to or smaller in size than the display range of the operation button and special operation of predetermined value or more that is equal to or greater than the size of the operation button, thereby executing the first command or the second command. Hence, it is possible to blindly perform operation even on the touch panel.

The present invention is directed toward the input device of portable electronic equipment further comprising an illumination sensor that detects ambient brightness of the display section, wherein the input control section changes a predetermined threshold value of a movement trajectory used at the time of determination of execution of the second command according to brightness detected by the illumination sensor and uses a threshold value, which is smaller than that used in a bright environment, when the brightness is lower than a predetermined amount of illumination.
A threshold value of a movement trajectory used for determining whether to execute the second command related to special operation is made smaller according to ambient brightness when the ambience is darker than a predetermined level. As a result, when blindly operating electronic equipment in a dark environment as in; for instance, a pocket or a bag, is performed, the user can determine special operation more preferably, so that operability can be enhanced.

Further, the present invention provides portable electronic equipment using any one of the foregoing input devices and a processing section that performs corresponding processing based on an instruction responsive to input operation from the input device.

### <Advantage of the Invention>

The present invention makes it possible to provide an input device of portable electronic equipment that allows a user to blindly perform input operation, despite on a touch panel, and portable electronic equipment.

### <Brief Description of the Drawings>

Fig. 1 is a block diagram showing the configuration of a principal section of an input device of portable electronic equipment of an embodiment of the present invention.
Fig. 2 is a schematic illustration showing a specific example display screen of the input device and specific example input operation of the first embodiment.
Fig. 3 is a sequence chart showing principal operation performed by the input device of the first embodiment.
Fig. 4 is a schematic view showing a specific example display screen and a specific example command allocation table employed by the input device of the first embodiment.
Fig. 5 is a schematic illustration showing a specific example display screen of the input device and specific example input operation of a second embodiment.
Fig. 6 is a schematic view showing a relation between an amount of operation and special operation to be perceived in the input device of the second embodiment.

### <Descriptions of the Reference Numerals and Symbols>

- 1: INPUT DEVICE
- 10: TOUCH PANEL
- 20: OPTICAL SENSOR
- 30: DISPLAY SECTION
- 31: TO 35 OPERATION BUTTON
- 41, 42: MOVEMENT TRAJECTORY
- 50: SOUND OUTPUT SECTION
- 60: AMPLIFIER
- 100: APPLICATION
- 200: INPUT SIGNALANALYSIS SECTION
- 210: COMMAND ALLOCATION TABLE
- 300: INPUT SIGNAL CONTROL SECTION
- 400: SETTING CONTROL SECTION

### <Best Modes for Implementing the Invention>

Embodiments provided below show example configurations achieved by applying the present invention to a portable phone terminal as an example input device of portable electronic equipment.

### (First Embodiment)

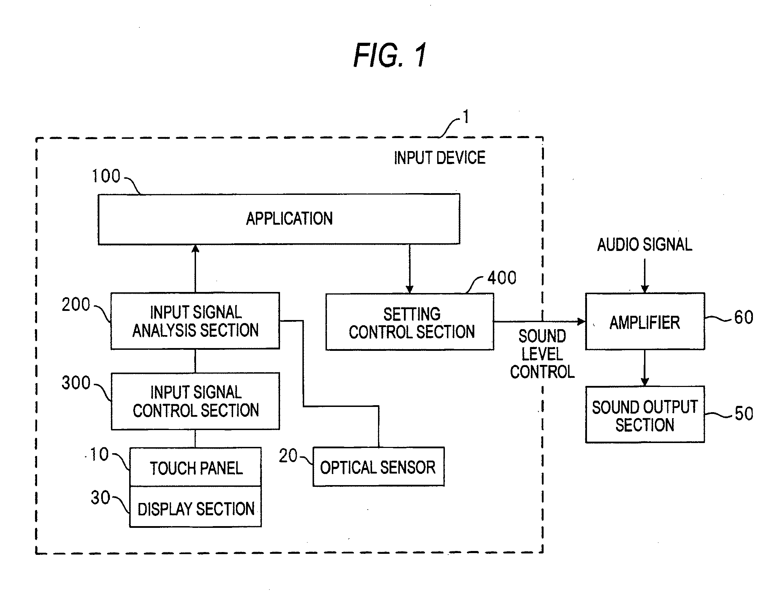

Fig. 1 is a block diagram showing the configuration of a principal section of an input device of portable electronic equipment of an embodiment of the present invention.

An input device of the present embodiment is a device presumed to be utilized by a user to perform input operation on portable electronic equipment; for instance, a portable phone terminal, a personal digital assistant (PDA), a portable music player, and a portable game machine. The input device is provided with a touch panel that is built in portable electronic equipment and that has an input function for enabling performance of touching or tracing action on an input surface of a display section.

The input device 1 shown in Fig. 1 is built from a touch panel 10, an optical sensor 20, a display section 30, an application 100, an input signal analysis section 200, an input signal control section 300, and a setting control section 400. The portable electronic equipment equipped with the input device 1 has an amplifier 60 for use in outputting a sound signal and a sound output section 50, such as a speaker and a headphone.

The touch panel 10 is an input device for operation purpose and includes a transparent pressure sensitive sheet formed in a planar shape. The touch panel periodically outputs a signal representing occurrence/non-occurrence of a touch on the surface of the pressure sensitive sheet and coordinate information about a position where a touch is detected. Therefore, as a result of a user pressing (touching) the surface of the pressure sensitive sheet with his/her finger or by use of a stylus pen, a signal showing occurrence of a touch and coordinate information about an input position are output. The touch panel 10 may also be configured by use of a detection element other than the pressure sensitive sheet, so long as the element enables detection of occurrence/non-occurrence of a contact and coordinates of a touched input position.

The display section 30 is a device that enables displaying of various pieces of visible information, like texts, drawings, and images, on a planar display screen and that is made up of a liquid crystal display device, or the like. The touch panel 10 is superimposed on the display screen of the display section 30, thereby making up an input surface. Accordingly, the user can touch a specific position (a position where operation buttons, and the like, are displayed) on the touch panel 10 while ascertaining details on the display screen of the display section 30 by means of the light passed through the touch panel 10.

The optical sensor 20 is an element that enables detection of brightness (illuminance) achieved in the vicinity of the touch panel 10. A photodiode or a CDS (cadmium sulfide) cell, for instance, can be utilized. In the first embodiment, information output by the optical sensor 20 is not utilized.

The application 100 is a program (middleware) that provides an interface for exchanging various data, control information, and the like, between a high-level individual application program (e.g., a program that offers a music play function) and the input device 1 that provides functions for input operation.

The input signal control section 300 controls receipt of a signal output from the touch panel 10 that is an input device. Specifically, it is determined whether a signal input by the touch panel 10 is a signal or noise. When an appropriate signal, which is not noise, is detected, information about occurrence/non-occurrence of a touch and coordinates of a touched position is notified to the input signal analysis section 200 at a given interval.

The input signal analysis section 200 analyzes information input by the input signal control section 300, whereby specifics of user input operation are correlated with a previously-allocated command, and a control signal for instructing execution of a corresponding command is output. Specifically, there are detected an operating state equivalent to simple pressing of a button (contacted), an operating state showing release of the button from a pressed state (non-contacted), operation details, like a movement trajectory (displacement of a contact position), achieved when a contact position is moved while being pressed, and coordinates of the position of operation (input coordinates). The size of the movement trajectory is recognized, and a result of recognition is reflected on a command to be executed. Further detailed operation will be described later. A result of analysis performed by the input signal analysis section 200 is input to the setting control section 400 by way of the application 100. In the input device 1, an area that commands processing responsive to input operation based on an input signal from the touch panel 10 is referred to as an input control section. The input control section includes the input signal analysis section 200.

The setting control section 400 manages various parameters used at the time of operation of electronic equipment. The setting control section 400 manages; for instance, a sound level control parameter for controlling a sound level when music is played, a brightness control parameter for controlling brightness of a display screen of the display section 30, and the like. The application section 100 and the setting control section 400 implement functions of the processing section in the portable electronic equipment.

When sound level control (volume control) is carried out, the setting control section 400 inputs a value of a sound level control parameter to the sound signal output amplifier 60 as a control signal for adjusting a gain. For instance, when the user performs input operation on the touch panel 10 for controlling a sound level, the input signal analysis section 200 recognizes the input operation. A recognition result is input to the setting control section 400 by way of the application 100, whereby the sound level control parameter of the setting control section 400 is changed. The gain of the amplifier 60 is thereby changed, so that the volume of sound output from the sound output section 50 changes.

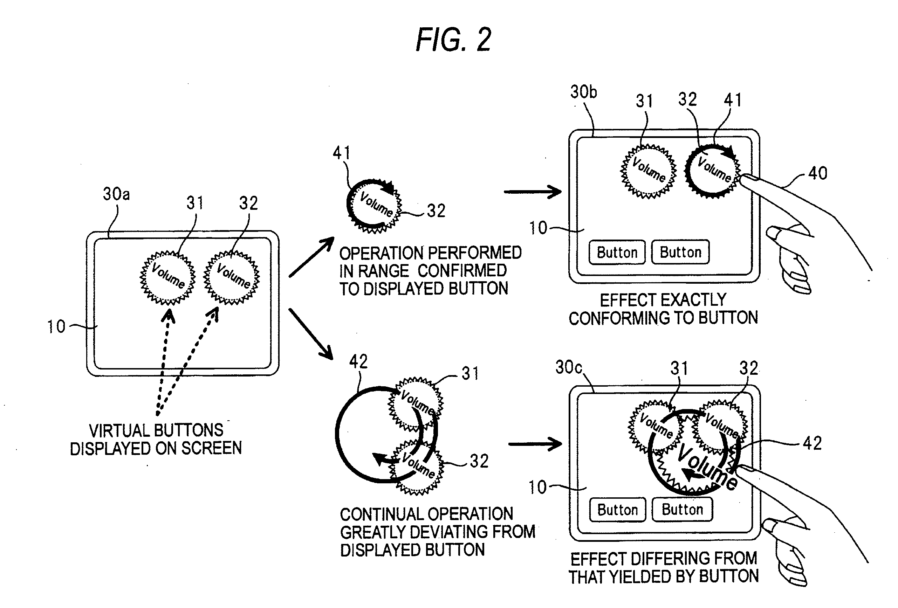

Fig. 2 is a schematic illustration showing a specific example display screen of the input device and specific example input operation of the first embodiment. Specific example operation of the input device of the first embodiment is described by reference to Fig. 2. Operation buttons 31, 32, and the like, which assume circular shapes imitating volume operation knobs and which are visible information are displayed on a display screen 30a of the display section 30 shown in Fig. 2. The user can operate the touch panel 10 while viewing specifics displayed on the screen; in other words, visible information about the operation buttons 31 and 32 on the touch panel, by means of light passing through the touch panel 10 superimposed on the screen.

In the embodiment shown in Fig. 2, when the user performs input operation, such as rotation of an operation knob along an edge of the operation button 32, with a finger 40 as is represented by a movement trajectory 41 on the display screen 30b in an upper portion of the drawing, the input signal analysis section 200 recognizes the operation as ordinary operation exactly conforming to the operation button, whereupon the application 100 executes a first command that has previously been allocated to the corresponding operation button. Specifically, when the movement trajectory 41 is equal to or smaller than the size of the edge of the operation button 31 or 32, the first command allocated to the corresponding operation button is executed.

In the meantime, when large circular input operation is performed by moving the finger 40 so as to draw a circular movement trajectory 42 that is comparatively larger than a predetermined value (e.g. an operation button that is twice or more an operation button size) as illustrated on a lower display screen 30c of the drawing, the input signal analysis section 200 recognizes the input operation as input operation for effecting special function; namely, predetermined special operation (a special gesture) that is different from original operation and that deviates from the operation button. In contrast to the case when the normal touch panel operation corresponds to the operation button like the movement trajectory 41, the application 100 executes a second command that is defined in another way. Specifically, in the case of the movement trajectory 42 made by special operation that is larger than an indication of the operation button by a predetermined size or more, the second command allocated to the special operation is executed. The application 100 imparts a control instruction, such as a status change corresponding to the command, to the setting control section 400 or executes operation corresponding to the command on itself. The second command is not limited to a command differing from the first command. It is also implied that the second command is defined as the same command as that of the first command in consideration of a case where operation similar to that effected by actuation of an operation button is made possible by blind operation.

The present embodiment is described on the assumption that continual circular movement operation which goes round and round is performed as special operation and that a status, such as a sound level, is continually changed as a command, which corresponds to the input operation, in response to continual operation.

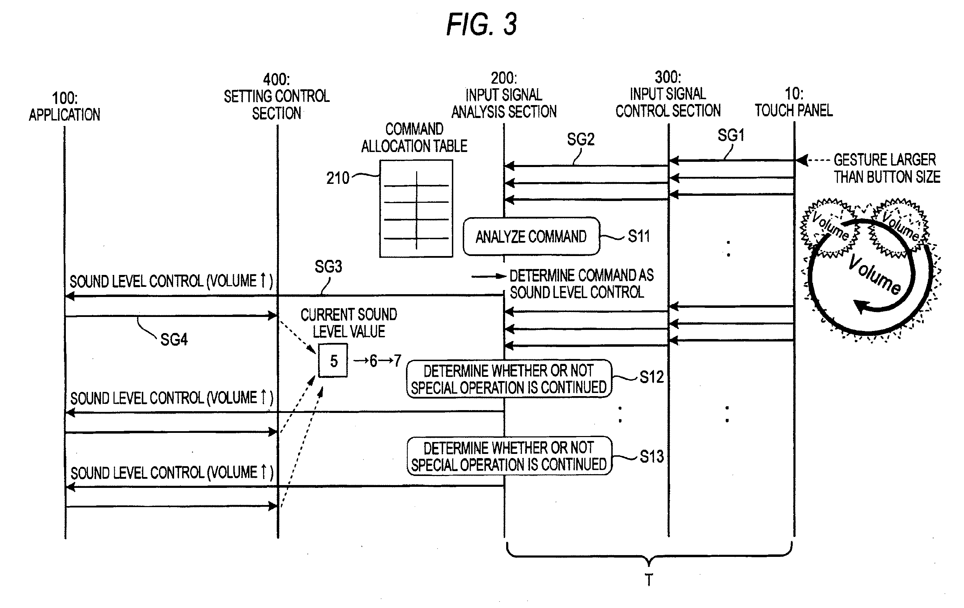

Specific processing procedures of the input device of the first embodiment are now described by reference to Fig. 3. Fig. 3 is a sequence chart showing principal operation of the input device of the first embodiment.

When the user performs input operation by touching the touch panel 10 and when the touch panel 10 is subjected to touch operation, an operation detection signal SG1 including information about coordinates of an input position on the touch panel 10 is output to the input signal control section 300 at a given cycle. By eliminating noise, the input signal control section 300 imparts, as an operation signal SG2, only effective information from among the operation detection signal SG1 output from the touch panel 10 to the input signal analysis section 200. In a period of time T provided on the right side of Fig. 3, input coordinate information from the touch panel 10 is continually notified to the input signal analysis section 200 by way of the input signal control section 300.

The input signal analysis section 200 analyzes a command correlated to the input operation of this time in step S11. Specifically, the input position, the movement trajectory, and the like, are detected based on the input operation signal SG2, the corresponding command is determined by utilization of a previously-set, held command allocation table 210.

On this occasion, the input signal analysis section 200 first acquires input coordinates showing an input position when operation is commenced; makes a reference to the command allocation table 210; and determines whether or not a corresponding operation button is specified at that coordinate position. When there is a corresponding operation button, the input signal analysis section 200 selects a command allocated to the operation button and imparts command information to the application 100, thereby executing a corresponding command. Timing at which the command is executed is a predetermined time interval when an input is made by operation involving continual changes in input coordinates. On the contrary, when an input is made by single operation, the command is executed when the user's finger has become detached from the touch panel 10, or the like.

Moreover, when the operation button is not specified for input coordinates achieved at the time of commencement of operation and when continual changes and movements in input coordinates are entailed, it is determined whether or not a gesture of special operation, which is special input operation, is specified, by reference to the command allocation table 210. When special operation is specified, the input signal analysis section 200 analyzes the movement trajectory of input operation, thereby determining whether or not the trajectory corresponds to the corresponding special operation. When a match exists, command information about the special command allocated to the special operation is given to the application 100, and a corresponding command is executed.

When input operation of "special operation" is detected in step S11, the input signal analysis section 200 determines in subsequent steps S12 and S13 whether or not the same special input operation is continual. When the special operation is continually performed, command information about the same command is output, and a corresponding command is again executed. When interruption of the special input operation is detected, a determination is made as to new input operation.

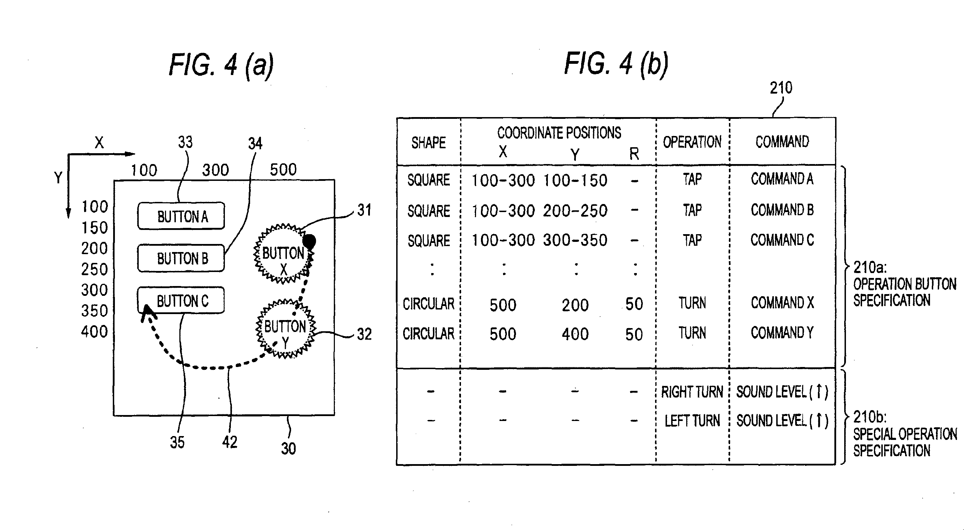

Fig. 4 is a schematic illustration showing a specific example display screen in the input device of the first embodiment and a specific example command allocation table used in the device. In the drawings, Fig. 4(a) shows operation buttons appearing on the display screen of the display section 30. Fig. 4(b) shows specifics of the command allocation table 210 corresponding to the respective operation buttons shown in Fig. 4(a). Five operation buttons, including circular operation buttons 31 and 32 that are imitations of volume operation knobs and substantially-oblong operation buttons 33, 34, and 35 that are imitations of push buttons, are arranged on the display screen of the display section 30. The input signal analysis section 200 makes a reference to the command allocation table 210 in steps S11, S12, and S13 shown in Fig. 3, thereby determining commands corresponding to the touch panel operations.

In the embodiment shown in Fig. 4, specifics of the command allocation table 210 can be categorized into two groups. One is an operation button specification group 210a that specifies normal operations for respective operation buttons. The other one is a special operation specification group 210b that specifies input operations by special gestures. The word "special operation" used therein is defined as input operation for moving and turning circularly the finger on the touch panel 10 so as to draw a movement trajectory that is sufficiently larger than the size of each of the operation buttons.

Registered in the command allocation table 210 as information correlated to respective input operations is information about the shape of an operation button, coordinate positions (X, Y) of the operation button, a display range of the operation button represented in size (a radius R), specifics (tapping, turning, and the like) of operation corresponding to the operation button, and the type of a command to be executed.

In step S11 shown in Fig. 3, or the like, a reference is therefore made to specifics of the command allocation table 210, and the thus-referred specifics are compared with input coordinates and movement trajectory of the input operation signal SG2, whereby a command to be executed can be specified.

For example, when the movement trajectory of continual sliding operation that turns so as to draw a circle in the vicinity of coordinate positions (500, 200) is recognized by means of the operation signal SG2 and when the diameter of the movement trajectory is equal to or smaller than the size of the operation button; namely, a value of 100 or less (a radius of 50 × 2 or less), the movement is determined to be performance of turning action of the corresponding operation button 31 (a button X). A normal command (a command X) allocated to the button X is determined to be a target of performance. Further, when tapping operation (signal tapping of a displayed button or continually touching operation performed at the same position in numbers) is detected within a range of coordinate positions (100 to 300, 100 to 150), pressing of a corresponding operation button 33 (a button A) is determined to have been performed, and a normal command (a command A) allocated to the normal button A is determined to be a target of performance.

Meanwhile, when the size of a movement trajectory of continual sliding operation detected by the input operation signal SG2 corresponds to turning operation of a predetermined threshold value or more (e.g., a twice or more the size of an operation button), special operation is determined to be performed, and a reference is made to specifics of the special operation specification group 210b of the command allocation table 210. When a movement trajectory of right turn is detected, a "sound level UP" command is determined to be a target of performance. When a movement trajectory of a left turn is detected, a "sound level DOWN" command is determined to a target of execution.

In relation to normal commands (commands A, B, C, X, and Y) allocated to respective operation buttons, functions, such as play and stop, are assigned to operation buttons to be pressed and a function of sound quality control, or the like, is assigned to an operation button to be turned in the case of; for instance, a music player.

When a result of analysis of the input operation performed in step S11 shown in Fig. 3 shows that turning operation is determined to be special right turn operation of a predetermined value or more and a command correlated to the special operation is recognized as a "sound level control (sound level UP)" command, the input signal analysis section 200 imparts, as a sound control command, a sound level UP command signal SG3 to the application 100. In this case, the application 100 imparts a sound control signal SG4 for increasing a sound level, as a control signal, to the setting control section 400 based on the command signal SG3, thereby changing a value of the sound level control parameter. The sound level control parameter of the setting control section 400 is increased by one from the current sound level value.

When user's input operation is continually performed (a state in which the finger continually remains contact with the touch panel 10), the input signal analysis section 200 continually performs determination of special operation in respective steps S12 and S13 based on the input operation signal SG2 and imparts determination results to the application 100. When right turn operation of a predetermined value or more, which is special operation corresponding to sound level control (sound level UP), is continually performed, the command signal SG3 for increasing a sound level is input from the input signal analysis section 200 to the application 100 at each predetermined time or predetermined amount of displacement. The sound level control signal SG4 for increasing a sound level is thereby consecutively input from the application 100 to the setting control section 400, whereby the value of the sound level control parameter is updated and increased step by step (a sequence of 5, 6, and 7 in the embodiment shown in Fig. 3).

In the configuration of the embodiment, such as that mentioned above, the input signal analysis section 200 executes a first command or a second command based on the size of a movement trajectory related to user's input operation. Accordingly, the user can use input operation allocated to the first command and input operation allocated to the second command in a distinguished manner according to the circumstances, by changing the size of input operation. For example, when the user performs input operation by moving the finger so as to draw a circle through continual action while touching the input screen of the touch panel, circular turning action of predetermined size or greater than those performed for the operation buttons appearing on the display section 30 is performed, whereby input operation allocated to the second command can be performed as a gesture of special operation. When such special operation is performed, the user does not need to align the operation to the position of the operation button, or the like, nor does the user need to see specifics displayed on the display section 30; hence, blind operation can readily be performed. Further, even when gestures are very similar to each other in terms of the geometry and location of a movement trajectory, a plurality of commands can be used appropriately according to the circumstances by means of the sizes of the gestures, so that comparatively complicate input operations also become possible.

The input device of the portable electronic equipment of the embodiment makes it possible for the user to blindly perform operation, such as sound level control operation, without taking the electronic equipment out of a pocket or a bag by means of performing the gesture of special operation, such as that mentioned above. For instance, the finger is moved on the touch panel 10 so as to draw a circle of a predetermine value or more that is larger than a normal circle by means of continual turning operation as indicated by the movement trajectory 42 shown in Fig. 2, whereby a desired operation command can be executed without glancing at a button appearing on the screen, so that blind operation becomes possible. As a matter of course, the user can also perform input operation while seeing respective buttons appearing on the screen of the electronic equipment. When performing operation while viewing the screen, the user perform input operation by distinguishing positions of respective operation buttons from each other, so that various independent commands can be executed for respective operation buttons.

When the user performs operation on premise that the user views a screen or when a plurality of buttons appear on the screen, only a movement trajectory passing through a position of any of operation buttons appearing on the screen may also be identified as a gesture of special operation. In such a case, for instance, processing, such as that described below, is considered to be performed when a determination is made to the size of a movement trajectory. Specifically, in a case where the size of a button is taken as "one," operation is recognized as special operation when there is detected a circular movement trajectory made by turning operation involving separation of the finger from one button by a distance of "two" or more after passage over the button and approaching of the finger again to the button by a distance of "one" or less.

In the foregoing specific embodiment, movement of a finger, such as drawing of a circle by means of continual turning action (a movement trajectory on the touch panel), is adopted as a gesture of special operation. However, another finger movement, such as curving movement other than circular movement or linear movement like reciprocal action, can also be adopted. Further, a movement trajectory detected by continual movement of the finger is subjected to determination in the foregoing specific embodiment, thereby detecting special operation. However, in addition to including the continual operation, such as that mentioned above, special operation may also include intermittent input operation; for instance, operation for temporarily detaching a finger from the touch panel during course of movement and resuming movement by again bringing the finger into a touch on the touch panel.

On the occasion of determination of the size of the movement trajectory, there can be utilized various pieces of coordinate information; for instance, a movement distance of a movement trajectory, the size of a drawing (e.g., a circle) made by the movement trajectory, a distance form a point where operation is started to the position of a finger achieved at each point in time, and the like.

The present embodiment shows the example input device of the common touch panel in which indications of operation buttons, and the like, on the display section 30 are brought in one-to-one correspondence to operation positions on the touch panel 10. However, it is not always necessary to bring specifics displayed on the display section 30 into direct correspondence to the operation positions on the touch panel 10. The present invention also encompasses a function for bringing only input operation appearing on the touch panel 10 into correspondence to a corresponding operation position.

As mentioned above, according to the first embodiment, when input operation is performed on the touch panel, special operation, such as large turning action, is defined and allocated a second command aside from a first command allocated to an operation button. Detecting the special operation makes it possible to perform blind operation originating from the special operation without glancing at an operation button on the display section.

### (Second Embodiment)

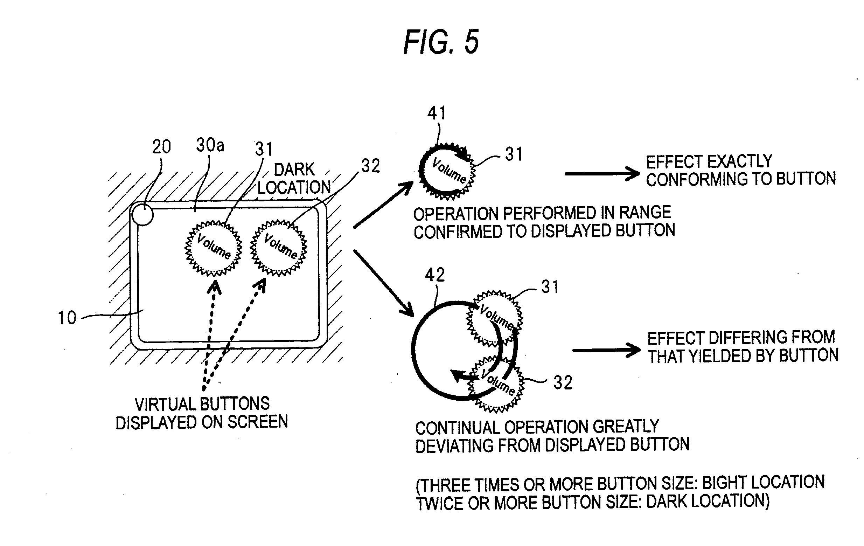

Fig. 5 is a schematic view showing a specific example display screen and specific example input operation of an input device of a second embodiment. The second embodiment is an example modification of the previously-described first embodiment and analogous to that shown in Fig. 1 in terms of the configuration of the device. Although the basic operation of the device performed in the second embodiment is analogous to that described in connection with the first embodiment, specifics of processing are changed so as to perform control operation commensurate with brightness by use of an optical sensor 20 that operates as a brightness sensor shown in Fig. 1. In the embodiment, a threshold value used for determining the size of a movement trajectory of special operation related to execution of a second command is changed according to a change in ambient brightness.

On this occasion, timing for detecting brightness by use of the optical sensor 20 is assumed to be a point in time when the user has started input operation. For instance, when a liquid crystal display device equipped with a back light is adopted as the display section 320, the back light is illuminated along with user's input operation, which in turn may induce a change in brightness detected by the optical sensor 20. Therefore, brightness is detected before illumination of the back light so that ambient brightness, other than the light emitted by the back light, can be detected.

In the embodiment shown in Fig. 5, when a small movement trajectory 41 that is input operation performed within a range of the edge of the operation button 31 is detected as illustrated in an upper portion of the drawing in the same fashion as in the first embodiment shown in Fig. 2, the input signal analysis section 200 recognizes the operation as normal operation exactly conforming to the operation button, and the application 100 executes a first command that is a command previously allocated to a corresponding operation button. Meanwhile, as illustrated in a lower portion of the drawing, when a circular movement trajectory 42 that is of a predetermined value or larger than the size of the operation button 31 is detected, the input signal analysis section 200 recognizes the operation as special operation, and the application 100 executes the second command differing from the command allocated to the operation button.

In relation to the size of the movement trajectory 42 to be recognized as special operation, a determination is made, while the size of an appearing operation button is taken as a reference, as to whether or not the size is equal to or larger than a threshold value showing a multiple of the reference size. The threshold value used herein is switched according to brightness, by determining whether the electronic equipment is used in a bright environment or a dark environment by use of illumination information output from the optical sensor 20. For instance, a number of three (times) is allocated to the threshold value in a bright environment where illuminance is greater than a predetermined level. A number of two (times), which is a threshold value smaller than that used in a bright environment, is allocated to the threshold value in a dark environment where illuminance is smaller than the predetermined level.

Specifically, when the position where the user performs input operation (movement of the finger remaining in touch with the touch panel 10) is greatly distant from display positions of the respective displayed operation buttons and when there is detected turning operation equal to or greater than the threshold value (three times or two times) the size of the button as indicated by the movement trajectory 42, the operation is recognized as a gesture of special operation.

Switching a threshold value according to brightness is to facilitate identification of a gesture of special operation. When the electronic equipment is used in a dark environment as in a case where the electronic equipment is used in a pocket; namely, in an environment where the electronic equipment undergoes blind operation with high probability, the user cannot see movement of his/her finger and accurately ascertain the size of input operation. Further, special operation may be performed in such a dark environment with high probability. Consequently, it is desirable that, even when the movement trajectory is comparatively small (about twice as large as the size of a displayed button), operation can be recognized as a gesture of special operation. Meanwhile, when the user performs input operation rather than blind operation while viewing a screen display in an ordinary environment, the equipment comes to be used in a comparatively bright environment. Therefore, the user himself/herself can accurately ascertain the size of a button and the position and size of input operation in a bright environment. Hence, in order to distinguish the gesture of special operation from another operation, it is desirable that the determination value for special operation be made sufficiently large. Accordingly, only when the threshold value is made large in the bright environment and when there is a comparatively large movement trajectory, such as a movement trajectory that is three times or more the size of a displayed operation button, the operation is recognized as a gesture of special operation.

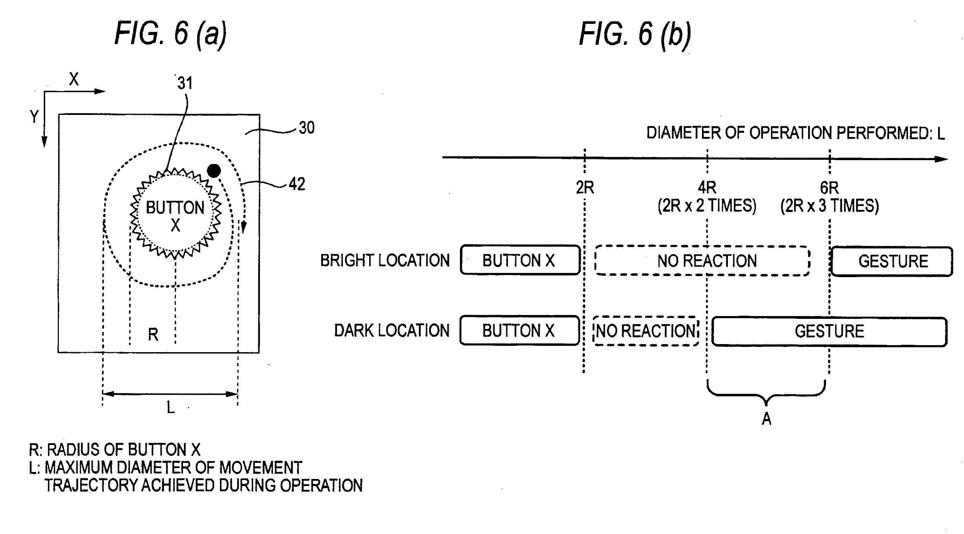

Fig. 6 is a schematic illustration showing relation between the amount of operation of the input device of the second embodiment and special operation to be recognized. In the drawings, Fig. 6(a) shows relation between an operation button appearing on the display screen of the display section 30 and the amount of operation of the button. Fig. 6(b) shows specifics of a change made, according to brightness, to a threshold value used for determining special operation.

In relation to the examples shown in Fig. 6, the operation button 31 (the button X) appears on the display screen of the display section 30 as shown in Fig. 6(a). The example is based on the assumption that the radius of the operation button 31 is R and that the diameter of the movement trajectory 42 related to the user input operation is L. Since the movement trajectory 42 made by user's operation is not an accurate circle, adopting an average value, a maximum value, and a minimum value of dimensions detected in a plurality of directions (a direction X, a direction Y, and the like) is also conceivable for the case of detection of the diameter L. Alternatively, adopting a detected dimension in only one direction is also conceivable.

As shown in Fig. 6(b), a value of three times (or more) is used in a bright environment as a threshold value for identifying the gesture of special operation. In a dark environment, switching is made so as to use a value of two times (or more) according to brightness.

Specifically, in a bright environment, when the diameter L of the movement trajectory 42 is 2R or less, operation is determined to be normal operation for the operation button 31 appearing at an input position. When the diameter L of the movement trajectory 42 is 2R or more and less than 6R, operation is determined to be ineffective input operation, and no reaction is made. When the diameter L of the movement trajectory 42 is 6R or more, the operation is determined to be a gesture of special operation.

In a dark environment, when the diameter L of the movement trajectory 42 is 2R or less, operation is determined to be normal operation for the operation button 31 appearing at the input position. Further, when the diameter L of the movement trajectory 42 is 2R or more and less than 4R, operation is determined to be ineffective input operation, and no reaction is made. When the diameter L of the movement trajectory 42 is 4R or more, the operation is determined to be a gesture of special operation.

In the configuration of the foregoing embodiment, the input signal analysis section 200 automatically switches, according to brightness, a threshold value used on occasion of determination of a size of a gesture of special operation for executing the second command. Hence, input operation appropriate for the circumstance becomes possible. For instance, when the user attempts to blindly operate the electronic equipment in a pocket or a bag, the electronic equipment comes to be used in a dark environment. In this case, the user cannot see indications on the display screen of the display section 30 or his/her finger and, therefore, cannot well ascertain the size of a gesture to be expressed. Accordingly, in the case of the dark environment, a comparatively small value is used as a threshold value in order to facilitate determination of special operation so that even a small gesture can be determined as special operation. Meanwhile, when special operation is performed in a bright environment as in the case where the user can perform operation while viewing the display screen, it is easy for the user to ascertain the size of the gesture. Accordingly, a comparatively large value is used as a threshold value for a bright environment, a gesture sufficiently larger than that used for ordinary input operation is made recognized as special operation, thereby preventing occurrence of faulty recognition. As above, operability for the case where special operation is performed on the touch panel can be enhanced.

In the second embodiment, it becomes possible to optimize operation so that operability is enhanced in any circumstances; namely, even when the user blindly performs input operation in a dark ambience and when the user can perform input operation while viewing the screen in a bright ambience. Thus, it is possible to appropriately detect special operation according to ambient brightness and implement blind operation conforming to the user's intension.

As mentioned previously, according to the embodiment, even user's input operation for the touch panel can blindly be performed by means of special operation. Therefore, use of independent mechanical buttons can also be omitted in connection with a frequently used button; for instance, an operation button for sound level control. It becomes possible to perform all input operations by use of only a touch panel without impairing user's operability. Even in the case of gestures that are equal to each other in terms of an input position and a geometry, a plurality of commands can be used according to the circumstances by means of a difference in size of a movement trajectory, and therefore higher operability can be accomplished. Omitting use of mechanical operation buttons leads to a reduction in the number of components and manufacturing cost. Further, a wider space on portable electronic equipment can be allocated to a display of a screen.

The present invention is not limited to the devices described in connection with the embodiments and also intended to be subjected to alterations or applications made by the persons skilled in the art on the basis of the descriptions of the specification and known techniques. The alterations or applications shall fall within a range where protection is sought.

The present patent application is based on Japanese Patent Application (JP-A-2007-296972) filed on November 15, 2007, the entire subject matter of which is incorporated herein by reference.

### <Industrial Applicability>

The present invention yields an advantage of the ability to perform blind operation even when the operation is user's input operation for a touch panel. The present invention is useful for an input device of a portable electronic equipment that can be utilized for input operation performed on portable electronic equipment; for instance, a portable phone terminal, a personal digital assistant (PDA), a portable music player, and a portable game machine, and also for portable electronic equipment.

## Claims

1. An input device of portable electronic equipment, comprising:
a touch panel having an input function by a contact operation on an input surface;
a display section superimposed on the input surface of the touch panel and operable to display visual information pertaining to an input operation; and
an input control section commanding a processing that is responsive to the input operation based on an input signal from the touch panel;
wherein the input control section instructs an execution of a command allocated to predetermined processing set for input coordinates and specifics of operation on the input surface of the touch panel; and
the input control section has a function of instructing performance of determining size of a movement trajectory of the input operation when an input operation involving movement of the input coordinates is detected as the input operation for the touch panel, and executing a first command in response to a first input operation whose movement trajectory is smaller than a predetermined value, and executing a second command differing from the first command or identical with the first command in response to second input operation whose movement trajectory is equal to or greater than a predetermined value.

2. The input device of portable electronic equipment according to claim 1, wherein the input control section issues an instruction for executing a first command in response to input operation allocated to an operation button displayed on the display section and also executes a second command in response to predetermined input operation deviating from the operation button by recognizing the operation as special operation.

3. The input device of portable electronic equipment according to claim 1, wherein the input control section issues an instruction for executing a first command allocated to a corresponding operation button when there is detected input operation whose movement trajectory is equal to or smaller than a display range of an operation button displayed on the display section and for executing a second command allocated to special operation when there is detected input operation whose movement trajectory is of a predetermined size or more when compared with the operation button.

4. The input device of portable electronic equipment according to claim 1, further comprising:
an illumination sensor that detects ambient brightness of the display section, wherein the input control section changes a predetermined threshold value of a movement trajectory used at the time of determination of execution of the second command according to brightness detected by the illumination sensor and uses a threshold value, which is smaller than that used in a bright environment, when the brightness is lower than a predetermined amount of illumination.

5. Portable electronic equipment using the input device defined in any one of claims 1 through 4 and a processing section that performs corresponding processing based on an instruction responsive to input operation from the input device.

## Amended claims

### Amended claims under Art. 19.1 PCT

**1.** (Amended) An input device of portable electronic equipment, comprising:
a touch panel having an input function by a contact operation on an input surface;
a display section superimposed on the input surface of the touch panel and operable to display visual information pertaining to input operation; and
an input control section commanding a processing that is responsive to the input operation based on an input signal from the touch panel;
wherein the input control section instructs an execution of a command allocated to predetermined processing set for input coordinates and specifics of operation on the input surface of the touch panel; and
the input control section has a function of instructing performance of determining size of a movement trajectory of the input operation when an input operation involving movement of the input coordinates is detected as input operation for the touch panel caused by a touch, executing a first command in response to first input operation whose movement trajectory is smaller than a predetermined value, and executing a second command differing from the first command in response to second input operation whose movement trajectory is equal to or greater than a predetermined value.

**2.** (Deleted)

**3.** The input device of portable electronic equipment according to claim 1, wherein the input control section issues an instruction for executing a first command allocated to a corresponding operation button when there is detected input operation whose movement trajectory is equal to or smaller than a display range of an operation button displayed on the display section and for executing a second command allocated to special operation when there is detected input operation whose movement trajectory is of a predetermined size or more when compared with the operation button.

**4.** The input device of portable electronic equipment according to claim 1, further comprising:
an illumination sensor that detects ambient brightness of the display section, wherein the input control section changes a predetermined threshold value of a movement trajectory used at the time of determination of execution of the second command according to brightness detected by the illumination sensor and uses a threshold value, which is smaller than that used in a bright environment, when the brightness is lower than a predetermined amount of illumination.

**5.** (Amended) Portable electronic equipment using the input device defined in any one of claims 1, 3 and 4 and a processing section that performs corresponding processing in accordance with an instruction responsive to input operation from the input device.
